Europäisches Patentamt

European Patent Office

Office européen des brevets

(11) Publication number: **0 210 630**
**A2**

## EUROPEAN PATENT APPLICATION

(21) Application number: 86110389.3

(22) Date of filing: 28.07.86

(51) Int. Cl.⁴: **G11B 5/012**

(30) Priority: 29.07.85 US 760178

(43) Date of publication of application:
**04.02.87 Bulletin 87/06**

(84) Designated Contracting States:
**DE FR GB IT**

(71) Applicant: **Xebec**
**2055 Gateway Place**
**San Jose, California 95110(US)**

(72) Inventor: **Redmond, Donald R.**
**1099 Maraschino Drive**
**San Jose, Cal. 95129(US)**
Inventor: **Dieckman, John H.**
**463 Juniper Court**
**Sunnyvale Cal. 94086(US)**

(74) Representative: **Bernhardt, Klaus**
**Radeckestrasse 43**
**D-8000 München 60(DE)**

(54) **Method of formatting data storage disks.**

(57) A method for re-formatting a magnetic data storage disk utilizing a Hall-effect sensor associated with the spindle motor to generate signals at least twice per revolution. In the re-formatting operation, sector location information is read from a track on the disk, and re-formatting is initiated following a Hall-effect signal only if the sector is identified as the first sector on the track. Accordingly, synchronization of a re-formatting operation is obtained using information provided from a first formatting operation.

Fig. 2

EP 0 210 630 A2

## Method of Formatting Data Storage Disks

BACKGROUND OF THE INVENTION

Field of the Invention

The present invention relates to a method of formatting a magnetic disk data storage device and, more particularly, to an improved formatting method to establish a an index point relative to a magnetic data storage disk.

Description of the Prior Art

In the field of electronic data handling, it is typical to store data in binary form on the face of a rotatable disk which is coated with a magnetizable substance such as iron oxide. In operation, such a disk is rotated by a so-called spindle motor and the binary data is encoded upon, or retrieved from, the face of the disk by a movable electromagnetic transducer device called a read/write head. More particularly, the binary information is magnetically encoded on the face of the disk in concentric rings, called tracks, and the read/write transducer is selectively positioned in a direction radial of the disk at a particular track at which information is to be recorded or retrieved. Once a desired track is located, the read/write transducer will find a particular location on the track, called a sector location, at which the read or write operation will be accomplished. A typical five and one-quarter inch diameter disk, for example, will have four hundred to six hundred tracks for data storage and thirty-two sectors per track.

In many magnetic recording disk systems, the read/write transducer is driven to seek a desired track on the disk by means of a motor called a stepper motor coupled to a capstan mechanism. Such motors and capstan mechanism translate electrical commands from a controller for the disk drive system to mechanical movement of the read/write transducer across the face of the magnetic recording disk. To accurately locate the read/write transducer at a particular location on a desired track on a magnetic disk, it is necessary that the controller receive certain orientation information. For example, it is typical to provide a rotational speed sensor on the spindle motor and to utilize the output of the speed sensor as an input control for the stepper motor via the disk drive controller. Also, it is typical for a read/write transducer to orient itself as to a sector location on a track by reference to a so-called index point signal. In essence, an index point signal is a means to designate the first sector of a track.

The location designated by an index point signal is used for various functions. For example, the location may be utilized as a reference point for identifying the location of media defects. The location may be used also as the starting point for formatting the disk, or for reformatting operations.

In some magnetic disk systems, the index point signals are generated by a mechanical sensor connected to the drive for disk. For example, the mechanical sensor could be actuated by rotation of the disk so that, for each complete revolution, an index signal is generated.

It has been suggested in United States Patent 4,392,095 that a unique index mark can be generated from the commutation signal of a D.C. brushless motor. Further, the patent mentions a complex method for correlating index signals derived from the motor with so-called synchronizing signals stored on the surface of the disk. The result of the correlation is said to be the development of the same index mark upon every revolution of the spindle motor.

In a conventional magnetic disk drive system, Hall-effect sensors have been utilized to provide the disk drive controller with information indicative of the speed of the spindle motor. In such usage, the signals from the Hall-effect sensor are processed in the controller and utilized in control of the operation of a stepper motor.

SUMMARY OF THE INVENTION

It is an object of the present invention to provide an improved method for formatting, or reformatting, a magnetic recording disk which eliminates the need for mechanical index sensors.

Another object of the present invention is to provide a method of formatting a magnetic data recording disk utilizing signals from a Hall-effect type spindle motor sensor to provide index points.

In accordance with the preceding objects, the present invention provides a method of formatting a a magnetic data storage disk wherein signals provided by a Hall-effect type spindle motor sensor or the like are used for establishing an index signal which denotes the initial sectors on concentric tracks of data formed on the face of a magnetic recording disk.

In a particular embodiment of the present invention, there is provided a method of re-formatting a magnetic data storage disk upon which has been magnetically inscribed concentric tracks of binary data divided into sectors wherein each sector contains location-identifying information. This embodiment comprises the steps of generating signals which occur twice during each revolution of the magnetic data storage disk; immediately after generation of a first one of said signals, reading sector location-identifying information from the disk; if said sector from which the location-identifying information is read is identified as the first sector on the track, beginning a re-formatting operation; but if said sector from which the location-identifying information is read is not identified as the first sector on the track, sensing the next one of the signals and, thereupon, beginning a re-formatting operation. In this way, synchronization of the second formatting operation is obtained by utilizing information generated from the first formatting operation.

In view of the preceding, an advantage of the present invention is to provide a method for formatting or reformatting a magnetic recording disk which eliminates the need for mechanical index sensors.

An associated advantage of the present invention is to provide a method for formatting or reformatting a magnetic recording disk utilizing signals from a Hall-effect type spindle motor sensor to provide index points.

These and other objects and advantages of the present invention will no doubt become obvious to those of ordinary skill in the art after having read the following detailed description of the preferred embodiments which are illustrated in the various drawing figures.

## IN THE DRAWINGS

Fig. 1 is a functional diagram of a system for formatting a magnetic data storage disk according to the present invention;

Fig. 2A through 2D comprise diagrams of various states of outputs from the spindle motor sensor of the system of Fig. 1 and the system of Fig. 3; and

Fig. 3 is a functional diagram of a portion of a system to process the output signals from the spindle motor sensor of Fig. 1, to produce the output states shown in Figs. 2.

## DETAILED DESCRIPTION OF THE PREFERRED EMBODIMENT

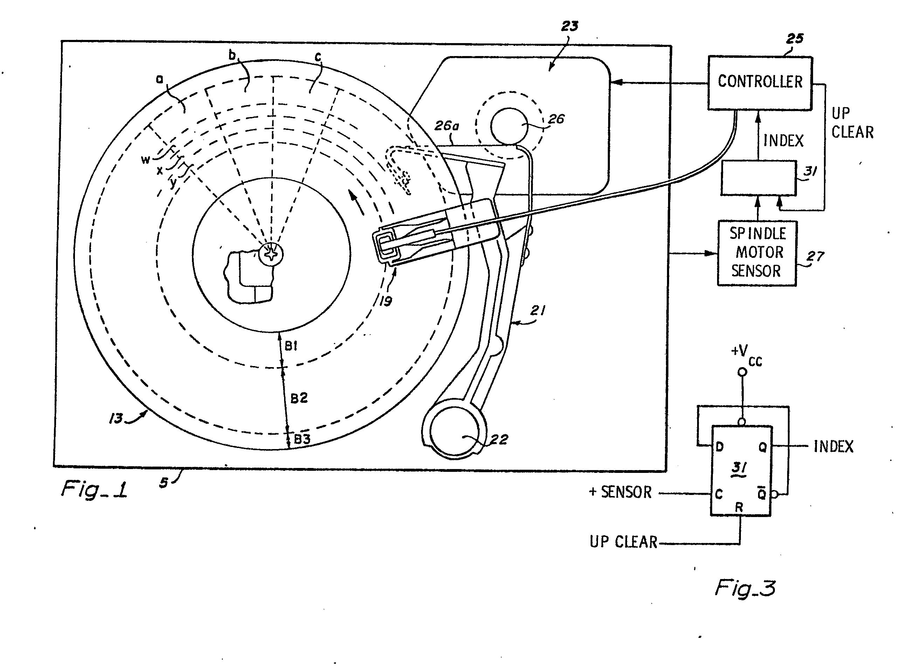

Fig. 1 generally shows a magnetic data storage disk 13 mounted for rotation about a central axis 15 driven by a spindle motor 17. (In the drawing, a portion of the disk 13 is cut away to reveal the spindle motor 17 which would otherwise be hidden from view.) Fig. 1 also generally shows an electromagnetic read/write transducer 19 for reading information from the face of the disk 13 or writing information thereon in binary form, an arm 21 pivoted about an axis 22 for moving the read/write transducer 19 radially across the face of the disk 13, a motor 23 for positioning the arm 21, and a microprocessor controller 25 for controlling the operation of the motor 23. The motor 23 can, for example, be a conventional stepper motor which operates a capstan mechanism 26 which winds a flexible band 26a attached to the arm 21 such that the position of the flexible band 26a relative to the capstan mechanism 26 determines the position of the arm 21 radially of the disk 13.

Fig. 1 also shows a sensor 27 which is connected to receive signals from the spindle motor 17 and which conveys those signals to the controller 25. In the preferred embodiment of the present invention, the spindle motor 17 is a DC brushless motor and the sensor 27 is a conventional "Hall-effect" sensor which produces an electrical output signal each half revolution of a motor by sensing magnetic field changes caused by rotation of the motor. More particularly, the Hall-effect sensor operates to sense the position of the motor windings relative to magnet members employed in the motor.

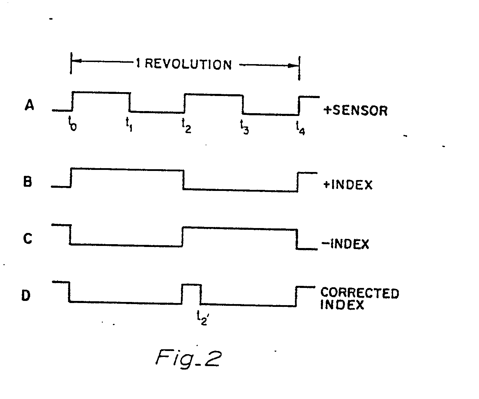

It should be noted from Figs. 2a and 2b that the Hall-effect sensor 27, in the preferred embodiment, provides two output states per revolution of the spindle motor 17. Although Hall-effect sensors which provide more than two output states per revolution of the disk can be utilized according to the present invention, the number of output states per revolution will always be an integral number greater than two.

For purposes of explanation of a formatting or re-formatting operation, the face of the disk 13 in Fig. 1 is shown to be divided into three distinct bands B1, B2 and B3. In practice, the three bands are respectively referred to as the inner guard band, the data band, and the outer guard band. Normally, only the data band is utilized to store information for processing by the computer system which is served by the disk 13. Further, Fig. 1 shows the data band B2 divided into concentric tracks designated w, x, and y. In the drawing, the size of these tracks has been exaggerated for ease of explanation; in actual practice, the data band on a typical five and one-quarter inch diameter disk will comprise four hundred to six hundred adjacent data tracks. Further, Fig. 1 shows the tracks divided into adjacent sectors a, b, c, etc. Again, the sizes of the sectors are exaggerated for ease of explanation; in practice, a typical data storage disk will have about sixty-four adjacent sectors. (A sector on a typical five and one-quarter inch disk will have the capability of storing 256 to 1024 bytes of information in digital form.)

In accordance with the present invention, each of the sectors a, b, c etc. should be understood to include a so-called "header" or "ID field" which is a space in which information is stored to record or identify the number of the track and the location of the sector. For example, the ID field in the track in the data band adjacent the inner guard band can include information to designate the track as "track 0", and ID fields in the tracks radially outward from that track can include information to designate the tracks as track 1, track 2, etc. Also, the ID fields contain information to designate the angular location, or sector number, of sectors relative to the disk. Normally, the sector numbers are referenced to some arbitrary angular position on the disk, which is designated as an "index point" and sectors are numbered clockwise from that point as "sector 0", sector 1, sector 2, etc. (Thus, sector "a" in the drawing would correspond to sector number "0", sector "b" would correspond to sector number "1", etc.)

Referring now to Figs. 2A through 2D, there are shown output signals from the Hall-effect sensor 27. In the preferred embodiment of the present invention, as mentioned above, the Hall-effect sensor provides two outputs per revolution of the magnetic recording disk 13. Thus, in the drawing of Fig. 2A, the output signal from the Hall-effect sensor goes to a positive value (logical "1") at some initial time $t_0$ and remains at that level until time $t_1$ when the output signal becomes a logical zero; the output signal remains at the logical zero level until time $t_2$. At time $t_2$, the output of the Hall-effect sensor again goes to a positive value and remains at that level until time $t_3$, whereupon the output signal falls to the logical zero value until time $t_4$. The time $t_1$ designates the elapse of one-quarter revolution of the spindle motor, the time $t_2$ designates a half revolution, the time $t_3$ designates three-quarters of a revolution, and the time $t_4$ designates a complete revolution. When the spindle motor 17 is rotating at a constant speed, the interval between $t_0$ and $t_1$ will equal the interval between $t_1$ and $t_2$. When the spindle motor is accelerating or slowing, the aforementioned time intervals will differ from one another, but each change of state will still designate a quarter revolution of the disk 13.

Fig. 3 illustrates a conventional bistable multivabrator element, commonly referred to as a flip-flop, which is arranged to operate upon the output signals from the Hall-effect sensor 27. One purpose of the flip-flop 31 is to process the signals from the Hall-effect sensor 27 to produce output signals from the flip-flop 31 which have only one positive cycle for each revolution of the spindle motor. Another purpose of the flip-flop 31 is to perform "reset" functions relative to the output signals from the spindle motor sensor 27. The operation of the flip-flop 31 can be best understood in conjunction with Figs. 2A-2D.

Fig. 2B can be understood to be a "desired" output of the flip-flop 31 based upon input signals from the Hall-effect sensor associated with the spindle motor 17. Fig. 2C can be understood to be on output of the flip-flop 31 which is inverted, or the binary complement, of the signal of Fig. 2B. Fig 2D shows the signal of Fig. 2C after it is reset (i.e. converted to its binary complement) at time $t_2'$. In operation, it is the positive-going pulse at time $t_2$ which initiates the reset function of the flip-flop 31 of Fig. 3. At time $t_2'$, the output signal from the flip-flop 31 is forced back to logical 0 where it remains until time $t_4$ when it goes to logical 1. Thus, the signals of Figs. 2B and 2D are in phase with one another after time $t_2'$.

Referring again to Fig. 3, the particular component illustrated is a so-called D-type flip-flop. The clocking input C to the flip-flop 31 is connected to receive output signals of the Hall-effect sensor 27. As those skilled in the art will readily understand, a D-type flip-flop functions to divide the input signals by two, so that for every two input signals there is only one output signal. The flip-flop component 31 includes a reset or "R" input designated as UP CLEAR in the drawing. The function of this input, consistent with the description of Fig. 2, is to invert the state of the output signal from the component. The output Q put of the flip-flop 31 is designated as INDEX to indicated that the output of the flip-flop 31 serves as the index signal for the system of Fig. 1.

With the above description in mind, operation of the system of Fig. 1 can be readily understood. In operation, the disk 13 is rotated at some predetermined angular velocity (typically about 3600 rpm) by the spindle motor 17 and, concurrently, the controller provides operating signals to the stepper motor 23 which actuates the arm 21 to place the read/write transducer 19 at a desired track on the disk 13. Once the transducer is located on the desired track, the transducer can be activated to read or write information on the sectors on the track.

If a disk that has no information previously encoded upon is to be placed in service, a formatting or initialization operation must be performed. In a system employing the present invention, the formatting operation will include placing the previously-discussed "header" or "ID" information in each sector in each track on the disk to uniquely identify the number of each track and the number of each sector. The designated location of a sector on a track depends upon the index signal. In practice, the first sector following the index signal is usually referred to as "sector zero", the next one a "sector one", etc. In practice, it is highly desireable that all of the sector zeroes begin at the same angular location on the disk. To achieve such a result, the index signals must be separated from one another by exactly one revolution of the disk 13.

To initially format a magnetic data storage disk, an index signal which reoccurs once per revolution is provided by the Hall-effect sensor 27 in conjunction with the flip-flop component 31. Upon receiving the first index signal, the controller 25 will operate the read/write transducer 19 to write location-identifying information in each sector along the track selected on the disk. After all of the sectors on a given track are thusly formatted, the controller 25 will direct the arm 21 to place the read/write transducer on an adjacent track and, upon receiving an index signal, will format that track. This process will continue from track to track until all of the tracks in the data band B2 on the disk 13 are formatted. Accordingly, the angular location of the sector designated as the zero sector on the first track formatted should be the same as the angular location of the "zero" sectors on subsequently formatted tracks. In other words, each track will be formatted, sector by sector beginning at the same angular location relative to the disk.

In practice of the present invention, it is preferred to utilize the leading, positive-going edges of the signals from the flip-flop 31 to designate the index point. Thus, with respect to the sensor signal of Fig. 2a, an index point will be designated at time $t_o$ and a second index point will not be generated again until the disk 13 has completed a full revolution after time $t_o$.

Consistent determination of an index signal is important where a disk, or a portion of a disk, is to be re-formatted. More particularly, it is important that the re-formatting operation along each track begin at the same angular position relative to the disk, so that the identification of defective sectors is maintained. The fact that the output signals from the Hall-effect sensor 27 are generated twice per revolution of the disk 13 means that the system of Fig. 1 may initially generate an index signal which is 180° out of phase with the sector "zero" on a particular track. The method described in the following will correct for such a situation.

According to this method, the read/write transducer 19 is operated to read sector identifying information from the sector which immediately follows an index signal generated by the Hall-effect sensor 27. If the identifying information confirms that the sector is the initial sector on the track (i.e., sector zero), then the re-formatting operation is allowed to proceed. However, if the sector identifying information indicates that the sector is not sector zero, the circuitry associated with the Hall-effect sensor is reset to shift the phase of the index signal by 180°. Referring to Fig. 3, such resetting is accomplished by the controller 25 providing a positive pulse on UP CLEAR, the reset input to the flip-flop 31. After the resetting step, the next index signal generated by the Hall-effect sensor 27 will coincide with the passage of sector zero past the read/write transducer 19.

At this junction, it should be appreciated that the Hall-effect sensor 27 could be of the type which generates more than two output signals per revolution of the disk 13. (In any event, however, the number of signals generated per revolution will be an integral number.) In such a case, the reset functions may have to be accomplished two or more times before the sector which immediately follows an index signal is sector zero.

Although the present invention has been described in terms of the presently preferred embodiments, it is to be understood that such disclosure is not to be interpreted as limiting. Various alterations and modifications will no doubt become apparent to those skilled in the art after having read the above disclosure. Accordingly, it is intended that the appended claims be interpreted as covering all alterations and modifications as fall within the true spirit and scope of the invention.

## Claims

1. A method for establishing an index signal which designates the initial sector on a track formed on the face of a magnetic recording disk comprising:

a. with a Hall-effect sensor, sensing rotation of a brushless drive motor rotatably driving the magnetic recording disk such that, upon each revolution of the disk, a first signal is generated at one angular location relative to the disk and a second signal is generated an integral fraction of a revolution after the first signal;

b. immediately after generation of the first signal, reading sector-identifying information from the face of the magnetic recording disk;

c. if the sector read in step "b" above is the initial sector on the track, treating said first signal as designating an index point; and

d. if the sector identified in step "b" above is not the first sector on the track, resetting the Hall-effect sensor and, as to said second signal from the Hall-effect sensor, repeating step "c" above.

2. A method for establishing an index signal according to claim 1 wherein,

the Hall-effect sensor provides only two output signals per revolution of the magnetic recording disk.

3. A method of establishing an index signal according to claim 2 wherein the drive device is a DC brushless motor.

4. A method for establishing an index signal which is the demarcation point for formatting a magnetic data storage disk comprising:

a. developing a signal which reoccurs an integral number of times per each revolution of a magnetic data storage disk;

b. utilizing a first one of the signals as an index signal to format information upon a magnetic data storage disk where said information includes, for each sector in each track on the disk, data which identifies the location of the sector relative to said first of the signals; thereafter,

c. reformatting the magnetic data storage disk by:

i. sensing one of the re-occuring signals;

ii. immediately thereafter, reading sector-identifying information from the disk;

iii. if the sector from which the information is read is identified as the sector which first followed said index signal, beginning a re-formatting operation;

iv. if the sector from which the information is read is not identified as the sector which first followed said index signal, sensing the next one of the re-occuring signals; and

v. repeating above steps (ii) through (iv) above until the identified sector is the sector which first followed said index signal.

5. A method of re-formatting a magnetic data storage disk upon which are magnetically written concentric tracks of binary data divided into sectors wherein each sector contains location-identifying information comprising the steps of:

a. generating signals which occur at least twice per each revolution of the magnetic data storage disk;

b. immediately after generation of a first one of said signals, reading sector location-identifying information from the disk;

c. if said sector from which the location-identifying information is read is identified as the first sector on the track, beginning a re-formatting operation;

d. if said sector from which the identifying information is read is not the first sector on the track, sensing the next one of said signals and, thereupon, beginning a re-formatting operation.

6. A method of reformatting a magnetic disk acccording to claim 5 including the step of inverting said first one of said signals prior to sensing said next one of said signals.

Fig_1

Fig_3

0 210 630

0 210 630

A ⊢————1 REVOLUTION————⊣ +SENSOR

$t_0$  $t_1$  $t_2$  $t_3$  $t_4$

B +INDEX

C −INDEX

D CORRECTED INDEX

$t_2'$

Fig_2